# EUROPEAN PATENT APPLICATION

(11) **EP 4 183 261 A1**
(43) Date of publication of application: **24.05.2023**
(21) Application number: 21208755.5
(22) Date of filing: 17.11.2021
(51) Int. Cl.: A23K 20/20, A23K 20/158

(54) **A FEED SUPPLEMENT FORMULATION FOR USE IN A FODDER FOR FEEDING A LIVESTOCK**

(71) Applicant: Vepidan ApS, 9670 Loegstoer (DK)
(72) Inventor: IBSEN, Lars Skov, 9670 Løgstør (DK)
(74) Representative: Zacco Denmark A/S

(57) **Abstract**

The invention relates to a feed supplement formulation for use in a fodder for feeding a livestock. The feed supplement formulation comprises metal oxide particles and one or more substances having at least a nonpolar part. The invention further relates to a method for processing and subsequent formulation of such feed supplement formulation comprising metal oxide particles.

## Description

### Technical Field

The invention relates to a feed supplement formulation for use in a fodder for feeding a livestock. The feed supplement formulation comprises metal oxide particles and one or more substances having at least a nonpolar part. The invention further relates to a method for processing and subsequent formulation of such feed supplement formulation comprising metal oxide particles.

### Background art

In present-day livestock breeding, especially intensive livestock breading, a very high production efficiency is required to obtain an economically feasible production. Examples of such is intensive pig breeding where each sow should preferably produce about 30 live offspring at weaning per annum and the weight of piglets is increased by a factor of five during the first four weeks after birth. To achieve such a high level of efficiency including the extremely high rate of weight gain it is a requirement that the piglets are constantly supplied with all essential macro- and micronutrients and that it can be avoided that they suffer from infectious diseases and other adverse health conditions including suboptimal gastrointestinal function.

One problem associated with highly intensive breading of piglets is that the suckling animals will develop anaemic conditions, unless a supplementary source of iron is provided. At birth, piglets have a total body reservoir of iron which is about 50 mg. During the first 3 to 4 weeks of life (the suckling period) their weight gain is so rapid that the daily requirement for iron is about 7-10 mg in order to maintain a physiologically normal level of haemoglobin in their blood, i.e. about 90-120 g per I. However, the daily supply of iron from the sow's milk is only about 1 mg and inevitably, a serious and often fatal, anaemic condition will occur within a few days after birth, if a supplementary iron supply is not provided.

Other micronutrients (or trace elements/trace minerals), which are not supplied in physiologically required amounts in sow's milk include metal ions such as zinc and copper ions. A shortage of such micronutrients will give rise to a reduced weight gain efficiency and increased susceptibility to infectious diseases.

Another prerequisite for a high rate of weight gain and good health conditions in for example piglets is that the capacity of their gastrointestinal tract to digest and absorb nutrients is at an optimum level, in particular around the time after weaning. In intensive pig breeding it is aimed at weaning the piglets as early as possible in order to obtain as many piglets per sow as possible. Thus, it is not uncommon to wean piglets at an age of 3 to 4 weeks where the diet of the piglets is changed suddenly or gradually from the natural nutrient source, sow's milk, to solid pre-starter or starter fodder formulations.

In intensive farm animal production, diarrhoea or scouring in young animals is another serious problem, which traditionally was predominantly prevented by the use of antimicrobial growth promoters (AGP's). However, widespread use of AGP's in animals is associated with a highly undesirable selection of antibiotic resistant bacteria which may be transferred to humans or healthy animals. Therefore, alternative means of prevention of scouring have been introduced in parts of the Industry.

Previously and currently used measures that has been taken to secure an appropriate performance of piglets during the suckling period and at and after weaning include (i) administering to the piglets a supplementary supply of iron and other physiologically required micronutrients such as copper and zinc, (ii) administering antibiotic growth promoting and disease controlling substances and (iii) supplementing during suckling the sow's milk diet with a pre-starter feed formulation generally having a composition which is close to that of the sow's milk.

However, the current practice of using antibiotic growth promoters is increasingly being objected to by consumers and health authorities due to the risk of selection of antibiotic resistant bacteria and therefore the use of such substances is restricted or even banned in several countries.

To solve this problem, many growth promoting substances have been studied as potential substitutes for antibiotic growth promoters; however, one challenge with such substances is that during the suckling period and the early post-weaning period, the consumption of dry feed materials by piglets is so limited that most of the studied substances cannot be administered in effective amounts via feed compositions and hence these attempts to substitute antibiotic growth promoters have generally been unsuccessful.

However, one potential solution to the above problem, is that it has been reported that copper or zinc ions, when administered to piglets at about 10 times the physiological requirement may have a growth promoting effect at a level comparable to that obtainable by antibiotic growth promoters.

Zinc is a trace mineral that is widely distributed in the animal body, and is a mineral essential for the normal growth and reproduction of animals, such as being a component of major enzymes and involved in hormonal functions in the body. In addition, it is involved in the metabolism of various nutrients and plays an important role in wound regeneration, skin protection, and animal immunity. In particular, the ability to prevent and suppress diarrhoea in piglets by adding a high concentration of zinc oxide (ZnO) to piglet feed is a well-known fact, for example, in 2010, the Danish Foulum National Academy of Animal Sciences found that adding 2500-4000 mg/kg zinc to the diet of early weaned piglets can significantly reduce the diarrhoea rate of piglets. Since then, a large number of studies and production practices have proved that adding high zinc is not only effective, but also very effective from an economically point of view.

Most literature believes that zinc oxide's anti-diarrhoea effect is the molecular state of zinc oxide, not zinc ions, so it is necessary to avoid the decomposition of zinc oxide in the acid environment of the stomach. At present, the main feed additives of zinc oxide circulating on the market are: ordinary zinc oxide, nano-scale zinc oxide, porous zinc oxide, enteric coated zinc oxide and so on. These types of zinc oxide have different defects. The first three types of zinc oxide dissolve more than 90% in the simulated gastric juice in vitro, that is, most of them enter the intestinal tract in the form of zinc ions. Among them, nanoscale Zinc oxide also has shortcomings such as agglomeration, low bulk density, and difficulty in mixing with feed evenly.

Although enteric-coated zinc oxide can ensure the passage of the stomach, it adopts the traditional mixing, granulation, and fluidized bed coating production process, which has the disadvantages of long process flow, high energy consumption, low production efficiency, and the coating material it needs to be dissolved in a flammable organic solvent, which poses a certain safety hazard.

For these reasons, the industry is therefore currently adding a fairly large amount of zinc oxide to feed. Unfortunately, studies has also shown when zinc oxide is added at a high concentration (or other trace elements/trace minerals for that matter), a lot of zinc oxide is not absorbed due to high-dose zinc oxides having low bioavailability. Therefore most of the added zinc oxide is excreted with feces, which can interfere with the fermentation of pig manure or contaminate the soil and pollute the environment.

Therefore, many countries have already or are currently in the process of reducing the amount of metal oxide particles, especially zinc oxide particles, allowed as a supplement for feeding livestock. Therefore, with the tightening of regulations, the trend of reduction of zinc oxide in feed is obvious. Therefore, it is necessary to develop a new and efficient mixed metal oxide feed additive through preparation technology, especially a new and efficient mixed zinc oxide feed additive.

Accondingly, there is a need for alternative substances, which can suppress diarrhoea and assist farmers in sustaining favorable growth rates while at the same time not pose environmental and public health concerns. It is therefore an object of the present invention to provide a feed supplement formulation for use in a fodder for feeding a livestock comprising trace elements/trace minerals, wherein the formulation allows the trace elements/trace minerals to be given in a concentration low enough to overcome the above mentioned problems.

### Summary

The description herein of any aspect or embodiment of the invention using terms such as "comprising", "having," "including," or "containing" with reference to an element or elements is intended to provide support for a similar aspect or embodiment of the invention that "consists of", "consists essentially of", or "substantially comprises" that particular element or elements, unless otherwise stated or clearly contradicted by context, e.g. a composition described herein as comprising a particular element should be understood as also describing a composition consisting of that element, unless otherwise stated or clearly contradicted by context. It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

The present invention solves the above mentioned problems by providing a method for mechanical processing and subsequent formulation and delivery of trace minerals, such as zinc, copper, and iron, in the form of metal oxide particles, especially copper oxide and zinc oxide particles. Hence, disclosed herein in a first aspect is a feed supplement formulation for use in a fodder for feeding a livestock, wherein the feed supplement formulation comprises a plurality of metal oxide particles, wherein the plurality of metal oxide particles have a mean particle size of 50 nanometres or less; wherein the feed supplement formulation further comprises one or more substances being nonpolar substances or substances having at least a nonpolar part; and wherein the one or more substances are non-covalently bound to the plurality of metal oxide particles, such that the one or more substances at least partly reduce surface energy around each of the metal oxide particles.

Metal oxides are as also disclosed above not associated with public health concerns like antibiotic growth promoters are; however, they are posing environmental concerns due to the fairly high concentrations administered to the livestock. As briefly discussed above, metal oxide particles will tend to agglomerate, especially if used in a nanoparticle composition. This agglomeration is mainly because of the high surface energy that this kind of material have, hence agglomeration of nanoparticles is due to adhesion of particles to each other by weak forces leading to (sub)micronized entities. In contrast, nanoparticle aggregates are due to the formation of covalent or metallic bonds that cannot be easily disrupted.

High surface area to volume ratio of nanoparticles provides a very high surface energy. To minimize its surface energy the nanoparticles create agglomeration. Uncontrolled agglomeration of nanoparticles may occur due to attractive van der Waals forces between particles. This also means that with smaller sizes, the particles have higher relative surface area, higher energy, and higher relative numbers of surface atoms. Such surface atoms have unsaturated coordination (i.e. not complete coordination) and each atom has vacant coordination sites. This phenomenon is also called dangling bonds. More bonds therefore need to be formed for each surface atom. The atoms will try to make bonds, and such bonds tend to form between adjacent particles (bonds between surface atoms of different particles). This causes agglomeration. It should also be noted that even if smaller size particles were obtained by sonication or other techniques, the small particles are still subject to agglomeration afterwards.

The present invention utilises the one or more substances being nonpolar substances or substances having at least a nonpolar part to non-covalently bind to the plurality of metal oxide particles, which will serve as a counter balance of energy on the surface of the particles, hereby creating a region around each particle with a smaller surface energy, which will prevent the particles from agglomeration, i.e. the one or more substances at least partly reduce surface energy around each of the metal oxide particles. The substances will hereby also shield the dangling bonds of each particle from dangling bonds on other articles, hereby avoiding or minimizing agglomeration of particles.

Disclosed herein in a second aspect is a feed supplement formulation for use in a fodder for feeding a livestock, wherein the feed supplement formulation comprises a plurality of metal oxide particles, such as zinc oxide and/or copper oxide particles, wherein the plurality of metal oxide particles have a mean particle size of 50 nanometres or less, such as 20 nanometres or less; wherein the feed supplement formulation further comprises one or more oils, such as a triglyceride oil; and wherein the plurality of metal oxide particles suspended and evenly dispersed in the one or more oils.

Disclosed herein in a third aspect is a fodder for feeding a livestock comprising a feed supplement formulation wherein the feed supplement formulation comprises a plurality of metal oxide particles, wherein the plurality of metal oxide particles have a mean particle size of 50 nanometres or less; wherein the feed supplement formulation further comprises one or more substances being nonpolar substances or substances having at least a nonpolar part; and wherein the one or more substances are non-covalently bound to the plurality of metal oxide particles, such that the one or more substances at least partly reduce surface energy around each of the metal oxide particles.

Disclosed herein in a fourth aspect is the use of a feed supplement formulation in a fodder for feeding a livestock, wherein the feed supplement formulation comprises a plurality of metal oxide particles, wherein the plurality of metal oxide particles have a mean particle size of 50 nanometres or less; wherein the feed supplement formulation further comprises one or more substances being nonpolar substances or substances having at least a nonpolar part; and wherein the one or more substances are non-covalently bound to the plurality of metal oxide particles, such that the one or more substances at least partly reduce surface energy around each of the metal oxide particles.

Disclosed herein in a fifth aspect is a process for production of a feed supplement formulation for use in a fodder for feeding a livestock, wherein the feed supplement formulation comprises a plurality of metal oxide particles and one or more substances, wherein the plurality of metal oxide particles have a mean particle size of 50 nanometres or less and wherein the one or more substances being nonpolar substances or substances having at least a nonpolar part; and wherein in the process comprises the steps of:
- providing a plurality of metal oxide particles having a mean particle size of at least 50 nanometres;
- providing one or more substances being nonpolar substances or substances having at least a nonpolar part;
- suspending the plurality of metal oxide particles in the one or more substances hereby obtaining a metal oxide particle composition;
- grinding the metal oxide particle composition to obtain a metal oxide particle composition with a mean particle size of 50 nanometres or less hereby obtaining the feed supplement formulation wherein the one or more substances are non-covalently bound to the plurality of metal oxide particles, such that the one or more substances at least partly reduce surface energy around each of the metal oxide particles.

Disclosed herein in a sixth aspect is a feed supplement formulation comprising the feed supplement formulation obtained by the process according to the fifth aspect as disclosed herein.

Effects and features of the second to sixth aspects are to a large extent analogous to those described above in connection with the first aspect. Embodiments mentioned in relation to the first aspect are largely compatible with the second to sixth aspects.

### Detailed description

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

The present invention discloses a feed supplement formulation for use in a fodder for feeding a livestock, wherein the feed supplement formulation comprises a plurality of metal oxide particles, wherein the plurality of metal oxide particles have a mean particle size of 50 nanometres or less; wherein the feed supplement formulation further comprises one or more substances being nonpolar substances or substances having at least a nonpolar part; and wherein the one or more substances are non-covalently bound to the plurality of metal oxide particles, such that the one or more substances at least partly reduce surface energy around each of the metal oxide particles.

The present invention further discloses a feed supplement formulation according to the second aspect, a fodder for feeding a livestock according to the third aspect, use of a feed supplement formulation according to the fourth aspect, a process for production of a feed supplement formulation according to the fifth aspect, and a feed supplement formulation comprising the feed supplement formulation obtained by the process according to the fifth aspect according to the sixth aspect.

The term "feed supplement" is herein defined as a material used together with a fodder to feed a livestock. The feed supplement is used to improve the wellbeing of the livestock. It can be given orally and contain, in addition to what is disclosed herein, one or more ingredients, such as vitamins or amino acids, that are intended to supplement the fodder. It can be used undiluted or diluted prior to adding it the fodder or it can be given directly without adding it to a fodder, if needed.

The term "fodder" as used herein is directed towards something, which is fed to livestock, especially domestic animals.

The term "livestock" is herein defined broadly as any breed or population of animal kept by humans for a useful, commercial purpose.

The term "nonpolar substances" as used herein is directed towards substances, such as solvents, or dried solvents that are made from made up of nonpolar molecules.

Polar molecules occur when two atoms do not share electrons equally in a covalent bond. A dipole forms, with part of the molecule carrying a slight positive charge and the other part carrying a slight negative charge. This happens when there is a difference between the electronegativity values of each atom. An extreme difference forms an ionic bond, while a lesser difference forms a polar covalent bond. If the electronegativity difference between the two atoms is between 0.5 and 2.0, the atoms form a polar covalent bond. If the electronegativity difference between the atoms is greater than 2.0, the bond is ionic. Ionic compounds are extremely polar molecules. Examples of polar molecules include water, ammonia, sulfur dioxide, hydrogen sulphide, and ethanol.

When molecules share electrons equally in a covalent bond there is no net electrical charge across the molecule. In a nonpolar covalent bond, the electrons are evenly distributed. In general, if the electronegativity difference between two atoms is less than 0.5, the bond is considered nonpolar, even though the only truly nonpolar molecules are those formed with identical atoms. Nonpolar molecules also form when atoms sharing a polar bond arrange such that the electric charges cancel each other out. Examples of nonpolar molecules include any of the noble gasses, any of the homonuclear diatomic elements, carbon dioxide, benzene, carbon tetrachloride, methane, ethylene, hydrocarbon liquids, such as gasoline and toluene, and most organic molecules.

A substance having at least a nonpolar part is also known as an amphiphile compound. An amphiphile compound is a compound/molecule which possesses both hydrophilic (water-loving, polar) and lipophilic (fat-loving, nonpolar) properties. Common amphiphilic substances could be lipoproteins, phospholipids, or surfactants.

In one or more embodiments, the one or more substances being nonpolar substances or substances having at least a nonpolar part is selected from one or more oils, such as triglyceride oils or paraffin oils; one or more surfactant, such as emulsifiers; or combinations thereof.

A metal oxide particle, or any particle as disclosed herein, is used to define a small-localized object comprising a specific mass defined by its mean particle size. The particles of the size given herein could also be referred to as metal oxide nanoparticles.

There are several methods for measuring particle size and particle size distribution. Some of them are based on light, other on ultrasound, or electric field, or gravity, or centrifugation. When particle size is disclosed herein it is measured via a Malvern Zetasizer, which measure the particle size of dispersed systems from sub-nanometer to several micrometers in diameter, using the technique of Dynamic Light Scattering (DLS).

In all methods the size is an indirect measure, obtained by a model that transforms, in abstract way, the real particle shape into a simple and standardized shape, like a sphere (the most usual) or a cuboid (when minimum bounding box is used), where the size parameter (ex. diameter of sphere) makes sense. Exception is the mathematical morphology approach, where no shape hypothesis is necessary.

Definition of the particle size for an ensemble (collection) of particles presents another problem. Real systems are practically always polydisperse, which means that the particles in an ensemble have different sizes. The notion of particle size distribution reflects this polydispersity. There is often a need for a certain average particle size for the ensemble of particles. Therefore, when the term "mean particle size" is used herein, it refers back to the average particle size for the ensemble of particles in the formulation.

In one or more embodiments, the plurality of metal oxide particles are non-covalently coated metal oxide particles.

It is known that metal oxide particle and be covalently coated. For example, a particle can be polymer-coated, which may alter the properties of said particle. When the term "non-covalently coated" is used, it refers to the metal oxide particle not comprising a coating covalently bound to said particle, i.e. the particle as such is only made of the metal oxide as such without other covalent bounds then the bound formed between the metal and the oxide.

In one or more embodiments, the plurality of metal oxide particles are selected from zinc oxide (ZnO) particles, copper oxide (CuO) particles, manganese oxide (MnO), ferrous oxide (FeO), or combinations thereof.

Zinc(II) oxide is an inorganic compound with the formula ZnO. ZnO is a white powder that is insoluble in water. It is used as an additive in numerous materials and products including cosmetics, food supplements, rubbers, plastics, ceramics, glass, cement, lubricants, paints, ointments, adhesives, sealants, pigments, foods, batteries, ferrites, fire retardants, and first-aid tapes. Although it occurs naturally as the mineral zincite, zinc oxide can also be produced synthetically. Zinc oxide particles are particles made of zinc oxide.

Copper(II) oxide or cupric oxide is the inorganic compound with the formula CuO. It is a black solid and one of the two stable oxides of copper, the other being Cu2O or copper(I) oxide (cuprous oxide). As a mineral, it is known as tenorite. It is a product of copper mining and the precursor to many other copper-containing products and chemical compounds. Copper oxide particles are particles made of copper(II) oxide.

Manganese(II) oxide is an inorganic compound with chemical formula MnO. It forms green crystals. The compound is produced on a large scale as a component of fertilizers and food additives. Like many monoxides, MnO adopts the rock salt structure, where cations and anions are both octahedrally coordinated.

Ferrous oxide or iron(II) oxide is the inorganic compound with the formula FeO. Its mineral form is known as wüstite. One of several iron oxides, it is a black-colored powder that is sometimes confused with rust, the latter of which consists of hydrated iron(III) oxide (ferric oxide).

In one or more embodiments, the plurality of metal oxide particles are selected from zinc oxide (ZnO) particles, copper oxide (CuO) particles, or combinations thereof.

In one or more embodiments, the feed supplement formulation is a liquid formulation feed supplement formulation.

In one or more embodiments, the livestock is a domestic animal.

A domestic animal is any of various animals (such as the horse, sheep, or pig) domesticated so as to live and breed in a tame condition.

In one or more embodiments, the livestock is selected from horse, donkey, cattle, zebu, Bali cattle, yak, water buffalo, gayal, sheep, goat, reindeer, Bactrian camel, Arabian camel, llama, alpaca, domestic pig, rabbit, and guinea pig, such as horse, cattle, sheep, goat, and domestic pig, such as domestic pig, such as domestic piglets.

In one or more embodiments, the one or more substances is one or more nonpolar solvents.

A solvent is normally understood as a substance that dissolves a solute, resulting in a solution. However, it the present invention the solvent would not dissolve the metal oxide particle, but instead make a suspension in which the metal oxide particles are distributed. The solvent in the present invention is a liquid.

In one or more embodiments, the plurality of metal oxide particles are evenly dispersed in the one or more nonpolar solvents.

When using the phrase that the plurality of metal oxide particles are evenly dispersed in the one or more nonpolar solvents is meant that the amount of metal oxide particles are approximately spread equally among and inside all of the nonpolar solvent, such that the particles are potentially equally shielded.

In one or more embodiments, the one or more substances is one or more nonpolar solvents, and wherein the plurality of metal oxide particles are evenly dispersed in the one or more nonpolar solvents.

In one or more embodiments, the nonpolar solvents is selected from one or more oils.

An oil is any nonpolar chemical substance that is a viscous liquid at ambient temperatures and is both hydrophobic (does not mix with water) and lipophilic (mixes with other oils). Oils have a high carbon and hydrogen content. Most oils are unsaturated lipids that are liquid at room temperature.

The general definition of oil includes classes of chemical compounds that may be otherwise unrelated in structure, properties, and uses. Oils may be animal, vegetable, or petrochemical in origin, and may be volatile or non-volatile.

In one or more embodiments, the one or more oils are selected from one or more triglyceride oils, one or more paraffin oils, or combinations thereof.

A triglyceride oil, also known as a triglyceride (TG, triacylglycerol, TAG, or triacylglyceride) is an ester derived from glycerol and three fatty acids. Triglyceride oils are the main constituents of body fat in humans and other vertebrates, as well as vegetable fat. They are also present in the blood to enable the bidirectional transference of adipose fat and blood glucose from the liver, and are a major component of human skin oils. Many types of triglyceride oils exist, where a lot of them are comprise a mixture of various triglycerides combined in one mixture. They may be named after their source, such as olive oil, cod liver oil, shea butter, tail fat or have a traditional name of their own, such as butter, lard, ghee, and margarine. Some of these names refer to products that contain substantial amounts of other components besides fats proper.

Paraffin oil is any of various hydrocarbon oils obtained from petroleum, for example mineral oil.

In one or more embodiments, the nonpolar solvents is selected from one or more oils, such as one or more triglyceride oils, one or more paraffin oils, or combinations thereof.

In one or more embodiments, the feed supplement formulation further comprises water, and wherein the one or more oils are dispersed in the water hereby forming an oil-in-water emulsion.

By the one or more oils being dispersed in the water hereby forming an oil-in-water emulsion is meant that an emulsion has been created between the one or more oils and the water. An emulsion is a mixture of two or more liquids that are normally immiscible owing to liquid-liquid phase separation. Emulsions are part of a more general class of two-phase systems of matter called colloids. Although the terms colloid and emulsion are sometimes used interchangeably, emulsion should be used when both phases, dispersed and continuous, are liquids.

In an emulsion, one liquid (the dispersed phase) is dispersed in the other (the continuous phase). In the above embodiment the one or more oils (the dispersed phase) are dispersed in the water (the continues phase). In another embodiment, the water (the dispersed phase) is dispersed in the one or more oils (the continues phase). Hence, in one or more embodiments, the feed supplement formulation further comprises water, and wherein the water is dispersed in the one or more oils hereby forming an water-in-oil emulsion.

Oil and water can form, first, an oil-in-water emulsion, in which the oil is the dispersed phase, and water is the continuous phase. Second, they can form a water-in-oil emulsion, in which water is the dispersed phase and oil is the continuous phase. Multiple emulsions are also possible, including a "water-in-oil-in-water" emulsion and an "oil-in-water-in-oil" emulsion.

Emulsions, being liquids, do not exhibit a static internal structure. The droplets dispersed in the continuous phase (sometimes referred to as the "dispersion medium") are usually assumed to be statistically distributed to produce roughly spherical droplets.

In one or more embodiments, the feed supplement formulation further comprises one or more surfactants, such as anionic, cationic, zwitterionic, or non-ionic surfactants.

A surfactant is compound that lower the surface tension (or interfacial tension) between two liquids, between a gas and a liquid, or between a liquid and a solid. Herein surfactant referees back to a compound that lower the tension between two liquids, especially between an oil and water. The surfactant preferably acts as an emulsifier.

The surfactant may be one selected from an anionic surfactant, a cationic surfactant, a zwitterionic surfactant, or a non-ionic surfactant.

Anionic surfactants contain anionic functional groups at their head, such as sulfate, sulfonate, phosphate, and carboxylates.

Cationic surfactants comprises a cationic head group, such as pH-dependent primary, secondary, or tertiary amines, or such as permanently charged quaternary ammonium salts.

Zwitterionic surfactants have both cationic and anionic centres attached to the same molecule. The cationic part is based on primary, secondary, or tertiary amines or quaternary ammonium cations. The anionic part can be more variable and include sulfonates. The most common biological zwitterionic surfactants have a phosphate anion with an amine or ammonium, such as the phospholipids phosphatidylserine, phosphatidylethanolamine, phosphatidylcholine, and sphingomyelins.

Non-ionic surfactants have covalently bonded oxygen-containing hydrophilic groups, which are bonded to hydrophobic parent structures. The water-solubility of the oxygen groups is the result of hydrogen bonding. Hydrogen bonding decreases with increasing temperature, and the water solubility of non-ionic surfactants therefore decreases with increasing temperature. Non-ionic surfactants are less sensitive to water hardness than anionic surfactants, and they foam less strongly. The differences between the individual types of non-ionic surfactants are slight, and the choice is primarily governed having regard to the costs of special properties (e.g., effectiveness and efficiency, toxicity, dermatological compatibility, biodegradability) or permission for use in food.

In one or more embodiments, the feed supplement formulation further comprises one or more surfactants selected from cationic or non-ionic surfactants.

In one or more embodiments, the one or more surfactants are selected from one or more emulsifiers.

An emulsifier (also known as an "emulgent") is a substance that stabilizes an emulsion by increasing its kinetic stability. Emulsifiers are part of a broader group of compounds known as surfactants, or "surface active agents". Emulsifiers are compounds that are typically amphiphilic, meaning they have a polar or hydrophilic (i.e. water-soluble) part and a non-polar (i.e. hydrophobic or lipophilic) part. Because of this, emulsifiers tend to have more or less solubility either in water or in oil. Emulsifiers that are more soluble in water (and conversely, less soluble in oil) will generally form oil-in-water emulsions, while emulsifiers that are more soluble in oil will form water-in-oil emulsions.

In one or more embodiments, the one or more emulsifiers comprises at least one selected from narrow-range ethoxylate, octaethylene glycol monododecyl ether, pentaethylene glycol monododecyl ether, nonoxynols, Triton X-100, polyethoxylated tallow amine, cocamide monoethanolamine, cocamide diethanolamine, poloxamers, glycerol monostearate, glycerol monolaurate, sorbitan monolaurate, sorbitan monostearate, sorbitan tristearate, polysorbate, decyl glucoside, lauryl glucoside, or octyl glucoside.

In one or more embodiments, the one or more emulsifiers comprises at least one selected from poloxamers or polysorbate.

Poloxamers are nonionic triblock copolymers composed of a central hydrophobic chain of polyoxypropylene (poly(propylene oxide)) flanked by two hydrophilic chains of polyoxyethylene (poly(ethylene oxide)). Poloxamers are also known by the trade names Pluronic, Kolliphor (pharma grade), and Synperonic. Because the lengths of the polymer blocks can be customized, many different poloxamers exist that have slightly different properties.

Polysorbates are a class of emulsifiers used in some pharmaceuticals and food preparation. They are often used in cosmetics to solubilize essential oils into water-based products. Polysorbates are oily liquids derived from ethoxylated sorbitan (a derivative of sorbitol) esterified with fatty acids. Common brand names for polysorbates include Kolliphor, Scattics, Alkest, Canarcel, and Tween.

Polysorbate emulsifiers may be selected from polysorbate 20 (polyoxyethylene (20) sorbitan monolaurate), polysorbate 40 (polyoxyethylene (20) sorbitan monopalmitate), polysorbate 60 (polyoxyethylene (20) sorbitan monostearate), polysorbate 80 (polyoxyethylene (20) sorbitan monooleate), or combinations thereof. The number 20 following the 'polyoxyethylene' part refers to the total number of oxyethylene (CH2CH2O)- groups found in the molecule. The number following the 'polysorbate' part is related to the type of fatty acid associated with the polyoxyethylene sorbitan part of the molecule. Monolaurate is indicated by 20, monopalmitate is indicated by 40, monostearate by 60, and monooleate by 80.

In one or more embodiments, the plurality of metal oxide particles have a mean particle size of 40 nanometres or less, such as 30 nanometres or less, such as 25 nanometres or less, such as 20 nanometres or less, such as 15 nanometres or less, such as 10 nanometres or less, or such as 5 nanometres or less.

In one or more embodiments, the plurality of metal oxide particles have a mean particle size from 50 nanometres to 1 nanometres, such as from 40 nanometres to 1 nanometres, such as 30 nanometres to 1 nanometres, such as 25 nanometres to 1 nanometres, such as 20 nanometres to 1 nanometres, such as from 15 nanometres to 1 nanometres, such as from 15 nanometres to 2 nanometres, such as from 10 nanometres to 2 nanometres, such as from 8 nanometres to 2 nanometres, such as from 7 nanometres to 3 nanometres.

In one or more embodiments, in the fodder for feeding a livestock, each type of the plurality of metal oxide particles in the feed supplement formulation is in a concentration in the fodder from 300 ppm to 100 ppm, such as from 200 ppm to 100 ppm, such as approximately 150 ppm.

With a concentration of each type of the plurality of metal oxide particles being defined is meant that if e.g. the metal oxide particles is a combination of CuO particles and ZnO particles each of these two metal oxide particles can have a concentration in the range disclosed. This means that in this example, and if the range was from 200 ppm to 100 ppm, the CuO can have a concentration of 200 ppm in the fodder, while the ZnO can also have a concentration of 200 ppm in the fodder, making the total concentration of metal oxide particles 400 ppm, but having each type of metal oxide particle falling within the disclosed range.

In one or more embodiments, in the use of the feed supplement formulation, each type of the plurality of metal oxide particles in the feed supplement formulation is in a concentration in the fodder from 300 ppm to 100 ppm, such as from 200 ppm to 100 ppm, such as approximately 150 ppm.

In one or more embodiments, the grinding is done on a ball mill, such as a wet ball mill, with one or more balls.

A ball mill is a type of grinder used to grind or blend materials for use in mineral dressing processes, paints, pyrotechnics, ceramics, and selective laser sintering. It works on the principle of impact and attrition: size reduction is done by impact as the balls drop from near the top of the shell. High-quality ball mills can grind mixture particles to as small as 5 nm.

A ball mill consists of a hollow cylindrical shell rotating about its axis. The axis of the shell may be either horizontal or at a small angle to the horizontal. It is partially filled with balls. The grinding media are the balls, which may be made of steel (chrome steel), stainless steel, ceramic, or rubber. The inner surface of the cylindrical shell is usually lined with an abrasion-resistant material such as manganese steel or rubber lining. Less wear takes place in rubber lined mills. The length of the mill is approximately equal to its diameter.

In one or more embodiments, the balls are made of steel or zirconium.

In one or more embodiments, the balls have a diameter of 0.8 mm or less, such as 0.2 mm or less.

In one or more embodiments, the mill rotates with a speed of from 5 to 100 Hz, such as from 10 to 50 Hz.

In one or more embodiments, the obtained feed supplement formulation is dried hereby obtaining a powder feed supplement formulation.

When describing the embodiments, the combinations and permutations of all possible embodiments have not been explicitly described. Nevertheless, the mere fact that certain measures are recited in mutually different dependent claims or described in different embodiments does not indicate that a combination of these measures cannot be used to advantage. The present invention envisages all possible combinations and permutations of the described embodiments.

The present invention is further illustrated by the following examples, which are not to be construed as limiting the scope of protection. The features disclosed in the foregoing description and in the following examples may, both separately or in any combination thereof, be material for realising the invention in diverse forms thereof.

### Examples

The aim of the experiments are to evaluate if it is possible to increase the available particle surface by a factor of at least 2 to 3 compared to the particle surface of the agglomerates in the commercially available compositions. The zinc oxide particles called Zinc Oxide Nano Tec are from the supplier Grillo and is measured to have a specific surface area of 25-35 m2 per gram. The other zinc oxide compound (Pharma 4) is having a specific surface area of 4 m2 per gram. A rough estimates would be that the mean diameter for a 4 m2 per gram articles are 1 to 5 micrometres.

### Experiment 1 - Test of emulsifier in water suspension

The following three compositions (I, II, and III) were made according to the below experimental description:

| | **Sample I** | **Sample II** | **Sample III** |
|---|---|---|---|
| **Material** | | | |
| Zinc Oxide Nano Tec / in gram (g) | 90 | 90 | 90 |
| Mulsifan RT 141 *(Polysorbate 20)* / in gram (g) | 22.5 | 45 | 90 |
| Distilled water (1) / in gram (g) | 157.5 | 157.5 | 157.5 |
| Distilled water (2) / in gram (g) | 630 | 607.5 | 562.5 |
| **Table 1** | | | |

Equipment:
Beaker glass, immersion blender, scale, and microscope.

Experimental description:
Zinc Oxide, Mulsifan, and distilled water (1) are mixed in the beaker glass and blended/mixed with the immersion blender until a uniform suspension is obtained. Distilled water (2) is added to the suspension and the mixture is blended/mixed with the immersion blender until a homogeneous suspension without visible clots. After obtaining the homogenous mixture 5 g of said mixture was diluted with 20 g distilled water under stirring to obtain a sample mixture to be analysed under the microscope. Similarly a second sample mixture is provided from the homogenous mixture 1 day after preparing the homogenous mixture, again by diluting 5 g of said mixture with 20 g distilled water under stirring to obtain the second sample mixture to be analysed under the microscope.

### Experiment 2 - Test of lower amount of emulsifier in water suspension

The following three compositions (IV, V, and VI) were made according to the below experimental description:

| | **Sample IV** | **Sample V** | **Sample VI** |
|---|---|---|---|
| **Material** | | | |
| Zinc Oxide Nano Tec / in gram (g) | 90 | 90 | 90 |
| Mulsifan RT 141 *(Polysorbate 20)* / in gram (g) | 2.81 | 5.63 | 11.25 |
| Distilled water (1) / in gram (g) | 157.5 | 157.5 | 157.5 |
| Distilled water (2) / in gram (g) | 649.69 | 646.88 | 641.25 |
| **Table 2** | | | |

Equipment:
Beaker glass, immersion blender, scale, and microscope.

Experimental description:
Zinc Oxide, Mulsifan, and distilled water (1) are mixed in the beaker glass and blended/mixed with the immersion blender until a uniform suspension is obtained. Distilled water (2) is added to the suspension and the mixture is blended/mixed with the immersion blender until a homogeneous suspension without visible clots. After obtaining the homogenous mixture 5 g of said mixture was diluted with 20 g distilled water under stirring to obtain a sample mixture to be analysed under the microscope. Similarly a second sample mixture is provided from the homogenous mixture 1 day after preparing the homogenous mixture, again by diluting 5 g of said mixture with 20 g distilled water under stirring to obtain the second sample mixture to be analysed under the microscope.

### Experiment 3 - Test of two emulsifiers together in water suspension

The following composition (VII) was made according to the below experimental description:

| | **Sample VII** |
|---|---|
| **Material** | |
| Zinc Oxide Nano Tec / in gram (g) | 90 |
| Mulsifan RT 141 *(Polysorbate 20)* / in gram (g) | 4.50 |
| Distilled water (1) / in gram (g) | 157.5 |
| Distilled water (2) / in gram (g) | 621 |
| Kollidon 25 *(Polyvinylpyrrolidone)* / in gram (g) | 9 |
| Sodium hydrogen carbonate / in gram (g) | 18 |
| **Table 3** | |

Equipment:
Beaker glass, immersion blender, scale, and microscope.

Experimental description:
Zinc Oxide, Mulsifan, and distilled water (1) are mixed in the beaker glass and blended/mixed with the immersion blender until a uniform suspension is obtained. Distilled water (2), kollidon, and sodium hydrogen carbonate is mixed to obtain a clear solution. The clear solution obtained is added to the uniform suspension and this mixture is blended/mixed with the immersion blender until a homogeneous suspension without visible clots. After obtaining the homogenous mixture 5 g of said mixture was diluted with 20 g distilled water under stirring to obtain a sample mixture to be analysed under the microscope. Similarly a second sample mixture is provided from the homogenous mixture 1 day after preparing the homogenous mixture, again by diluting 5 g of said mixture with 20 g distilled water under stirring to obtain the second sample mixture to be analysed under the microscope.

### Experiment 4 - Test of suspension method and increased amount of Zinc Oxide

The following three compositions (VIII, IX, and X) were made according to the below experimental description:

| | **Sample VIII** | **Sample IX** | **Sample X** |
|---|---|---|---|
| **Material** | | | |
| Zinc Oxide Nano Tec / in gram (g) | 90 | 90 | 108 |
| Mulsifan RT 141 *(Polysorbate 20)* / in gram (g) | 4.5 | 4.5 | 5.4 |
| Distilled water (1) / in gram (g) | 157.5 | 157.5 | 189 |
| Distilled water (2) / in gram (g) | 603 | 603 | 603 |
| Kollidon 25 *(Polyvinylpyrrolidone)* / in gram (g) | 18 | 18 | 18 |
| Sodium hydrogen carbonate / in gram (g) | 27 | 27 | 27 |
| **Table 4** | | | |

Equipment:
Beaker glass, immersion blender, whisk, scale, and microscope.

Experimental description:
Sample VIII: Zinc Oxide, Mulsifan, and distilled water (1) are mixed in the beaker glass and blended/mixed with the immersion blender until a uniform suspension is obtained. Distilled water (2), kollidon, and sodium hydrogen carbonate is mixed to obtain a clear solution. The clear solution obtained is added to the uniform suspension and this mixture is blended/mixed with the immersion blender until a homogeneous suspension without visible clots. After obtaining the homogenous mixture 5 g of said mixture was diluted with 20 g distilled water under stirring to obtain a sample mixture to be analysed under the microscope. Similarly a second sample mixture is provided from the homogenous mixture 1 day after preparing the homogenous mixture, again by diluting 5 g of said mixture with 20 g distilled water under stirring to obtain the second sample mixture to be analysed under the microscope.
Sample IX: This sample is made according to the experimental description of sample VIII with the only change being that the clear solution obtained is added to the uniform suspension and this mixture is mixed with the whisk until a homogeneous suspension without visible clots.
Sample X: This sample is made according to the experimental description of sample IX with the only change being that only 252 gram of the clear solution obtained is added to the uniform suspension and this mixture is mixed with the whisk.

### Experiment 5 - Test of zinc oxide and copper oxide in oil suspension

The following two compositions (XI and XII) were made according to the below experimental description:

| | **Sample XI** | **Sample XII** |
|---|---|---|
| **Material** | | |
| Mulsifan RT 141 *(Polysorbate 20)* / in gram (g) | 25 | 25 |
| Rapeseed oil / in gram (g) | 1455 | 1455 |
| Tocopheryl acetate / in gram (g) | 20 | 20 |
| Zinc Oxide Pharma 4 / in gram (g) | 500 | - |
| Copper (II) oxide / in gram (g) | - | 500 |
| **Table 5** | | |

Equipment:
Beaker glass, immersion blender, whisk, scale, and microscope.

Experimental description:
Mulsifan, tocopheryl acetate, and rapeseed oil are mixed in the beaker glass until a uniform oil solution is obtained. Zinc Oxide / copper oxide is added to the oil solution and this mixture is blended/mixed with the immersion blender for 5 minutes at high speed to obtain an oil-metal oxide mixture. After obtaining the oil-metal oxide mixture 5 g of said mixture was diluted with 15 g rapeseed oil under stirring to obtain a sample mixture to be analysed under the microscope.

### Conclusion

All the experiments showed that the metal oxide particles (copper or zinc) were able to form stable suspensions with small particle size. All the above experiment when analysed under a microscope showed that the mixing method together with the nonpolar substances (at least a nonpolar part) such as the emulsifiers used in experiment 1-4 and/or the oil used in experiment 5 all stabilized the small particles in the solution. It was further tried to evaporate the aqueous suspensions of examples 1-4; however, it was further observed that if the homogenous mixture based on distilled water was dried large agglomerates would form, which could not be resuspended into smaller particles.

## Claims

1. A feed supplement formulation for use in a fodder for feeding a livestock, wherein the feed supplement formulation comprises a plurality of metal oxide particles, wherein the plurality of metal oxide particles have a mean particle size of 50 nanometres or less;
wherein the feed supplement formulation further comprises one or more substances being nonpolar substances or substances having at least a nonpolar part; and
wherein the one or more substances are non-covalently bound to the plurality of metal oxide particles, such that the one or more substances at least partly reduce surface energy around each of the metal oxide particles.

2. The feed supplement formulation according to claim 1, wherein the plurality of metal oxide particles are non-covalently coated metal oxide particles.

3. The feed supplement formulation according to any of the preceding claims, wherein the plurality of metal oxide particles are selected from zinc oxide (ZnO) particles, copper oxide (CuO) particles, or combinations thereof.

4. The feed supplement formulation according to any of the preceding claims, wherein the feed supplement formulation is a liquid formulation feed supplement formulation.

5. The feed supplement formulation according to any of the preceding claims, wherein the one or more substances is one or more nonpolar solvents, and wherein the plurality of metal oxide particles are evenly dispersed in the one or more nonpolar solvents.

6. The feed supplement formulation according to claims 5, wherein the nonpolar solvents is selected from one or more oils, such as one or more triglyceride oils, one or more paraffin oils, or combinations thereof.

7. The feed supplement formulation according to any of the preceding claims, wherein the feed supplement formulation further comprises one or more surfactants, such as anionic, cationic, zwitterionic, or non-ionic surfactants.

8. The feed supplement formulation according to claims 7, wherein the one or more surfactants comprises at least one selected from poloxamers or polysorbate.

9. The feed supplement formulation according to any of the preceding claims, wherein the plurality of metal oxide particles have a mean particle size from 50 nanometres to 1 nanometres, such as from 40 nanometres to 1 nanometres, such as 30 nanometres to 1 nanometres, such as 25 nanometres to 1 nanometres, such as 20 nanometres to 1 nanometres, such as from 15 nanometres to 1 nanometres, such as from 15 nanometres to 2 nanometres, such as from 10 nanometres to 2 nanometres, such as from 8 nanometres to 2 nanometres, such as from 7 nanometres to 3 nanometres.

10. A feed supplement formulation for use in a fodder for feeding a livestock, wherein the feed supplement formulation comprises a plurality of metal oxide particles, such as zinc oxide and/or copper oxide particles, wherein the plurality of metal oxide particles have a mean particle size of 50 nanometres or less, such as 20 nanometres or less; wherein the feed supplement formulation further comprises one or more oils, such as a triglyceride oil; and wherein the plurality of metal oxide particles suspended and evenly dispersed in the one or more oils.

11. A fodder for feeding a livestock comprising a feed supplement formulation according to any of claims 1-10.

12. The fodder for feeding a livestock according to claim 11, wherein each type of the plurality of metal oxide particles in the feed supplement formulation is in a concentration in the fodder from 300 ppm to 100 ppm, such as from 200 ppm to 100 ppm, such as approximately 150 ppm.

13. Use of a feed supplement formulation according to any of claims 1-10 in a fodder for feeding a livestock.

14. A process for production of a feed supplement formulation for use in a fodder for feeding a livestock, wherein the feed supplement formulation comprises a plurality of metal oxide particles and one or more substances, wherein the plurality of metal oxide particles have a mean particle size of 50 nanometres or less and wherein the one or more substances being nonpolar substances or substances having at least a nonpolar part; and wherein in the process comprises the steps of:
• providing a plurality of metal oxide particles having a mean particle size of at least 50 nanometres;
• providing one or more substances being nonpolar substances or substances having at least a nonpolar part;
• suspending the plurality of metal oxide particles in the one or more substances hereby obtaining a metal oxide particle composition;
• grinding the metal oxide particle composition to obtain a metal oxide particle composition with a mean particle size of 50 nanometres or less hereby obtaining the feed supplement formulation wherein the one or more substances are non-covalently bound to the plurality of metal oxide particles, such that the one or more substances at least partly reduce surface energy around each of the metal oxide particles.

15. A feed supplement formulation comprising the feed supplement formulation obtained by the process according to claim 14.
